# EUROPEAN PATENT SPECIFICATION

(11) **EP 3 518 068 B1**
(45) Date of publication and mention of the grant of the patent: **09.02.2022**
(21) Application number: 18153409.0
(22) Date of filing: 25.01.2018
(51) Int. Cl.: G05D 1/10, G05D 1/02

(54) **TRAJECTORY CONTROL FOR A SWARM OF VEHICLES**
TRAJEKTORIESTEUERUNG FÜR EINEN FAHRZEUGSCHWARM
COMMANDE DE TRAJECTOIRE POUR UN GROUPE DE VÉHICULES EN FORMATION

(43) Date of publication of application: 31.07.2019
(73) Proprietor: Nokia Technologies Oy, 02610 Espoo (FI)
(72) Inventor: SUVITIE, Arto, 00930 Helsinki (FI)
(74) Representative: Nokia EPO representatives

(56) References cited:
- US-A1- 2010 168 937
- US-B1- 6 405 124

## Description

### Field

The present application relates to apparatuses and methods for controlling movement of a formation of vehicles, such as - but not limited to - aircrafts (e.g. unmanned aerial vehicles (UAVs) or drones) or cars.

### Background

Multiple terms are used for UAVs, which generally refer to the same concept. The term drone, more widely used by the public, was coined in reference to early remotely-flown target aircrafts used for practice firing of a battleship's guns. The term unmanned aircraft system (UAS) was adopted by the United States Department of Defense (DoD) and the United States Federal Aviation Administration in 2005 according to their Unmanned Aircraft System Roadmap 2005-2030.

A UAV is defined as a "powered, aerial vehicle that does not carry a human operator, uses aerodynamic forces to provide vehicle lift, can fly autonomously or be piloted remotely, can be expendable or recoverable, and can carry a lethal or nonlethal payload".

In the following, the term UAV is intended to cover all types of unmanned aircraft systems.

A single UAV can be used for a multitude of use cases. However, the use of several UAVs makes it possible to complete tasks, such as area search much more efficiently. A group of UAVs (often referred to as a fleet or a swarm) can cover a larger area faster before having to replace the batteries. However, it is important to ensure that UAV flight paths do not intersect and there is no risk of collision when making turns and that followers will be left behind as waypoints are delayed by latency.

It has been determined that using multiple miniature UAVs to perform tasks is cheaper in both acquisition and maintenance in comparison to using a single large UAV.

The US2010/0168937 A1 discloses a flight control system for aircraft formation flight, which seems to be focused on accurately following the flight trajectory of another vehicle.

Furthermore, Sullivan, B.: "Capabilities of Flight Controllers for UAV Group Flight, s.l.", Lehigh University, 2016, describes a complicated algorithm to correct UAV flight paths to prevent crashes in case of arbitrary flight paths. However, in case of predefined lawnmower search patterns, it was held sufficient to simply limit the offsets for the guided waypoints.

US 6,405,124 B1 describes offset course guidance system using a shadow aircraft. An imaginary aircraft, called the "shadow aircraft," flies the original flight plan and, in turn, causes the true aircraft to fly the offset course. An aircraft navigation system comprising means for establishing an original course, means for establishing an offset course, said offset course offset by a predetermined distance from said original course, and a shadow aircraft to follow said original course while an actual aircraft follows said shadow aircraft, said actual aircraft maintaining said offset distance from said shadow aircraft. The offset is measured perpendicular from said original course.

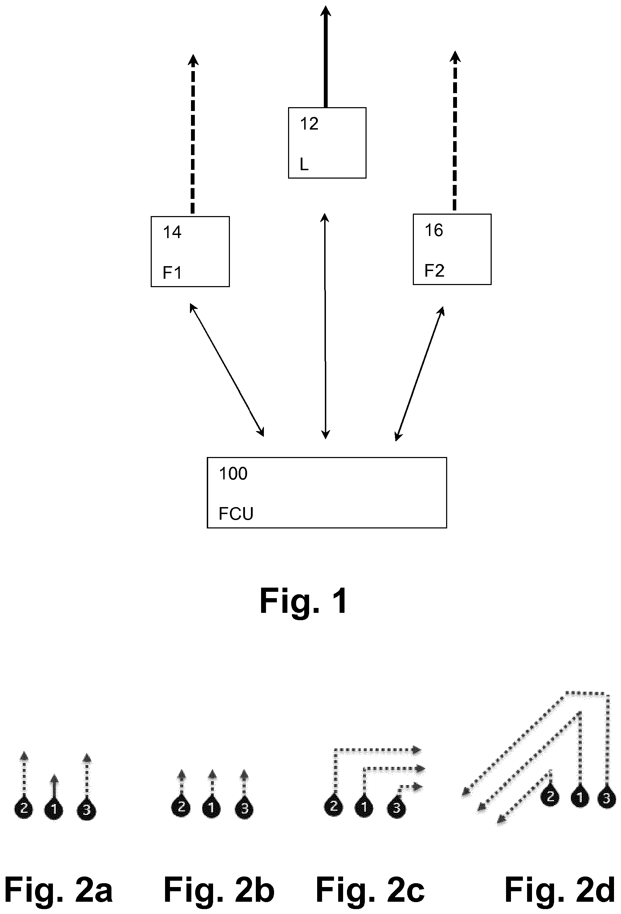

In an advantageous embodiment of the process of US 2010/0168937 a number of supporting points are determined on the trajectory of the lead aircraft, for which supporting points the spatial coordinates are known and a time coordinate is known with respect to a time base uniform for the formation. The trajectory of a lead aircraft with support points, as well as an estimated trajectory of a following aircraft with support points are calculated based on the support points on the trajectory of the lead aircraft. In the case of a concave flying turn (Fig. 2a), a straight line through support points stands in a perpendicular fashion on a straight line through support points. Simultaneously, a straight line through support points stands perpendicular on a straight line through support points. In the case of a convex flying turn (Fig. 2b), correspondingly, a straight line through support points is perpendicular to a straight line through support points as well as a straight line through support points is perpendicular to a straight line through support points. Support point on the trajectory of the following aircraft is therefore the center of gravity of the connection line between support points.

### Summary

There is provided according to a first aspect a method comprising designating a vehicle, determining a position of the designated vehicle; determining a route for the designated vehicle including segments with one or more waypoints, determining a planned route for another vehicle by using a rectangle and a next rectangle with one side of the rectangle and one side of the next rectangle being consecutive segments of the route of the designated vehicle, determining in an inner curve and in an outer curve of the other vehicle relative to the designated vehicle other substantially parallel sides of the rectangle and of the next rectangle, representing segments of the planned route of the other vehicle, causing to change the planned route of the other vehicle in an outer curve by adding a segment in a gap between an end point of other substantially parallel side of the rectangle and a start point of other substantially parallel side of the next rectangle, and causing to change waypoints of the planned route of the other vehicle in an inner curve to a crossing point between the other substantially parallel side of the rectangle relating to the other vehicle and the other substantially parallel side of the next rectangle relating to the other vehicle as a new waypoint.

The method may further comprise increasing speed and/or acceleration of the other vehicle if a distance between the new waypoint of the other vehicle and the determined position of the designated vehicle exceeds a predetermined threshold.

The method may further comprise controlling the determination of the planned other waypoint of the other vehicle so that the planned other waypoint is not set further towards the direction of the route (i.e. movement direction of the vehicle formation) than the next planned target waypoint of the designated vehicle.

The method may further comprise controlling the determination of the waypoint of the other vehicle so that if the route of the designated vehicle has more than one waypoint remaining, the following waypoint of the designated vehicle determines the maximum amount of a predetermined spatial offset for the other vehicle.

The method may further comprise controlling the determination of the new waypoint of the other vehicle so that the planned route of the other vehicle with the new waypoint does not intersect with the route of the designated vehicle.

The method may further comprise controlling the planned route of the other vehicle between successive waypoints so that the planned route never extends past corners of the route of the designated vehicle.

The method may further comprise generating a formation of the designated vehicle and at least one other vehicle based on predetermined parameters provided to the formation.

The method may further comprise causing to change to cover also causing to update.

Generating the vehicle formation based on predetermined parameters provided to the vehicle formation may further comprise setting the predetermined parameters by placing markers on a grid of a user interface.

The providing step may comprise periodically sending the new waypoint to the other vehicle(s).

The method may further comprise providing values of a planned flight altitude and field of view angles to respective payload cameras of the other vehicle and using the provided values to automatically determine a predetermined spatial offset for the other vehicles.

The method may further comprise initially generating a vehicle formation as a line formation, checking a predetermined minimum distance between each of the designated and other vehicles of the vehicle formation, and moving every other one of the other vehicles backwards so that a sideway spacing between the other vehicles substantially remains the same.

The method may further comprise calculating the sideway spacing between the other vehicles based on a horizontal camera angle, an altitude and a required minimum camera footage overlap of the respective payload cameras.

According to a second aspect there is provided an apparatus comprising means for designating a vehicle, means for determining a position of the vehicle, means for determining a route for the designated vehicle including segments with one or more waypoints, means for determining a planned route for another vehicle by using a rectangle and a next rectangle with one side being of the rectangle and one side of the next rectangle being consecutive segments of the route of the designated vehicle, means for determining in an inner curve and in an outer curve of the other vehicle relative to the designated vehicle other substantially parallel sides of the rectangle and of the next rectangle representing segments of the planned route of the other vehicle, means for causing to change the planned route of the other vehicle in an outer curve by adding a segment in gap between an end point of the parallel side of the rectangle and a start point of other substantially parallel side of the next rectangle, and means for causing to change waypoints of the planned route of the other vehicle in an inner curve to a crossing point between the other substantially parallel side of the rectangle relating to the other vehicle and the other substantially parallel side of the next rectangle relating to the other vehicle as a new waypoint.

According to a third aspect there is provided a device for controlling a vehicle formation may comprise apparatus as described herein. The device may be provided at a central ground station or at another vehicle.

According to other possible realization an apparatus comprising at least one processing core, at least one memory including computer program code, the at least one memory and the computer program code being configured to, with the at least one processing core, cause the apparatus to designate a vehicle, determine a position of the vehicle, determine a route for the designated vehicle including segments with one or more waypoints, determine a planned route for another vehicle by using a rectangle and a next rectangle with one side being of the rectangle and the next rectangle being consecutive segments of the route of the designated vehicle, determine in an inner curve and in an outer curve of the other vehicle relative to the designated vehicle other substantially parallel sides of the rectangle and of the next rectangle representing segments of a planned route of the other vehicle, cause to change the planned route of the other vehicle in an outer curve by adding a segment in a gap between an end point of the parallel side of the rectangle and a start point of other substantially parallel side of the next rectangle, and cause to change waypoints of the planned route of the other vehicle in an inner curve to a crossing point between the other substantially parallel side of the rectangle relating to the other vehicle and the other substantially parallel side of the next rectangle relating to the other vehicle as a new waypoint..

According to other possible realization, the proposed vehicle formation control approach could be used in connection with autonomous cars when e.g. two cars in different lanes are approaching a curve.

A chipset may comprise the apparatus as described herein.

Embodiments of the present application aim to address problems associated with the state of the art.

### Summary of the Figures

For a better understanding of the present application, reference will now be made by way of example to the accompanying drawings in which:
Figure 1 shows schematically a system for flight control of an aircraft formation, in which some embodiments can be implemented;
Figures 2a-2d show schematically different flight control scenarios of an aircraft formation;
Figure 3 shows schematically a representation of a flight path determination according to some embodiments;
Figure 4 shows a flow diagram of a flight control procedure according to some embodiments; and
Figure 5 shows schematically a representation of a control interface for adjusting aircraft parameters according to some embodiments.

### Embodiments of the Application

The following describes in further detail suitable systems, apparatuses and possible mechanisms for controlling the flight of a formation of UAVs. It is however noted that the described embodiments may also be implemented in other systems, apparatuses and possible mechanisms for controlling the movement of a formation of other vehicles, such as cars, ships etc.

Furthermore, a fleet of UAVs can be scaled up to provide better coverage and endurance, since the failure of a single UAV will not compromise the entire mission. Implementing a UAV fleet solution brings its own set of challenges. The user must be able to monitor the status of all UAVs in real time and there must be mechanisms in place to prevent collisions between the UAVs. Also, the control network must be capable of providing high bandwidth and low latency, which is especially important in search-and-rescue (SAR) operations. Furthermore, task assignment for large numbers of UAVs has a high combinatorial complexity. Centralized fleet control architectures tend to suffer from communication overhead and having the central decision maker be a single point of failure for the system, whereas decentralized architectures are sensitive to information discrepancies across UAVs, which may lead to conflicting decisions.

Missions for a UAV fleet can be either pre-planned or real-time, with the fleet moving in a formation or separately. Pre-planned missions have the benefit of working even with poor connectivity, whereas real-time missions may be interrupted or run into risk of collisions when messages don't reach their endpoints. When the fleet is moving in formations or organized swarms, it is possible to have one or more UAVs flying on a higher altitude to act as coordinators for the operation. A traditional method of searching for missing people is to send a team of people on foot to survey the area. This method still has some advantages over aerial search with UAVs. Most notably, the people will be able to see and hear their nearby surroundings much more accurately compared to a UAV. Furthermore, search dogs can be brought along to trace the people using their scent. However, the major drawback with this method is that despite being accurate, it is very slow to cover area, especially if the terrain is difficult to traverse. Also, it requires much more effort and dedicated personnel to carry out.

Performing the search operation with UAVs instead is a way to trade some accuracy for a considerable increase in speed and area coverage. As an example, a search method has been proposed for completely autonomous UAVs, in which the target area is split into cells and UAVs mark visited cells to be avoided by their peers, so that the search can be carried out without a complete preset flight plan. This method was inspired by insects that use pheromones to guide their peers. Another proposed search method is called gradient optimization, where an uncertainty map is generated for the search area by surrounding points of interest with gradually decreasing uncertainty. The UAVs then autonomously search the area, trying to cover most of the uncertain territory, while avoiding collisions. There are two approaches to scale up the previously presented search methods for a multi-UAV scenario. The first approach is to organize the UAV fleet into a search formation, which can then be considered as a single unit with a considerably larger field of view. When a search pattern is generated for such a formation, the lines of the path will be much further apart and the area is covered faster. The second approach is to simply split the search area (e.g., by using Voronoi tessellation on points of interest) into separate sub-areas, and allocating a single UAV to each area. This second approach is not as easy to accomplish as the formation search, but provides minimal flight time, and thus improves the performance.

The above approaches can also be combined to have individual UAVs and small UAV formations, each working on their own designated areas. Finding out the appropriate approach for different scenarios is something that needs to be determined on a case by case basis.

However, the controls are available for only a currently selected UAV, which means that the user will have to control each individual UAV at a time. Most of the currently available control software for UAVs seem to be mainly focused on the use case of flying a single drone to perform aerial photography or mapping.

It would therefore be desirable to provide at least one of a map that displays UAV location and routes, waypoint-based route planning, real-time UAV status display, UAV mission controls, real-time guided waypoint control, simultaneous connection to multiple UAVs, simultaneous control of multiple UAVs, planning of multiple routes, and swarm formation support.

Practical flight tests quickly reveal that the leader UAV would always fly several meters ahead of the others, turning a line formation into a V formation. This asynchronous behavior is partially caused by latency. Since the waypoints for each UAV are calculated as offsets of the last known location of the leader UAV, the communications delay between the ground station and the UAVs needs to be considered. Delay issues have also been noticed in other research, where the connections were done using traditional radio links instead of cellular communication (e.g. 4th Generation Long Term Evolution (LTE)).

Figure 1 shows schematically an exemplary system for flight control of an aircraft formation with three UAVs 12, 14, 16 flying in formation in accordance with the functional operation of some embodiments. One UAV 12 is designated as the leader (L) flown on the mission flight path by a flight control unit 100 (e.g. command and control ground station) while the remaining other UAVs 14, 16 are followers (F1, F2) that are led by being tracked in dependence on the position of the leader UAV 12. In an echelon formation, as depicted in Figure 1, the leader UAV 12 is leading the two follower UAVs 14, 16. Of course, there may be more than two followers, i.e., more than one on each side of the leader.

The initiation of an automatic formation flight and the formation parameters can be controlled via uplink commands transmitted from the flight control unit 100. Discrete uplinks may be used for enabling an airborne UAV formation control unit (not shown), which is at least provided in each of the follower UAVs 14, 16 to take control of the respective UAV. Additionally, appropriate downlink telemetry can be supplied by each airborne UAV formation control unit for ground control monitoring at the flight control unit 100.

The configuration of the flight control unit 100 may vary. Ground station control may be provided by manually operated control consoles and/or preprogrammed computers with respective user interfaces. In a minimal command/control system, one multiplexed flight control unit 100 can launch multiple UAVs into a formation flight. By "multiplexed" it is meant that the flight control unit 100 sequentially provides uplinks and receives downlinks to/from UAVs to be flown in a mission, while providing controller inputs for command uplinks to controller-selected UAV(s). First, the flight control unit 100 selects and launches the leader UAV 12 and may place it in a hold pattern (e.g. orbit mode). The flight control unit 100 may then select and launch each successive UAV in the appropriate follower order. When all UAVS for the formation flight are flying in formation in the hold pattern, the flight control unit 100 may again take control of the leader UAV 12 and starts control of the formation mission as explained in the following.

According to some embodiments, the flight control system can be based on the latest known position of the leader UAV 12 only. Then, target waypoint locations (target waypoints) for the follower drones 14, 16 are first determined (e.g. calculated as an offset from the leader location) and then the point was projected forwards to compensate for any delays. As a result, even if there were some gaps in communication, the follower UAVs 14, 16 would still keep flying in the right direction for a while, instead of immediately stopping to wait for further commands.

Figures 2a-2d show schematically different specific flight control scenarios of an aircraft formation and resulting requirements on the above flight control approach according to some embodiments.

In the scenario of Fig. 2a, the leader UAV 1 is controlled manually (no known waypoint), while the follower UAVs 2, 3 are provided with waypoints with offset towards the leader's flight direction. Here, the offset distance is proposed to be determined based on the flight speed.

In the scenario of Fig. 2b, the leader UAV 1 is provided with a single waypoint (e.g., guided waypoint or last mission waypoint) and the waypoint offsets for the follower UAVs 2, 3 are proposed to be limited to never go ahead of the next leader's waypoint.

In the scenario of Fig. 2c, the leader UAV 1 is provided with more than one waypoint (mission) and the waypoint offsets for the follower UAVs 2,3 are limited according to the next two waypoints. Here, the offset distance is proposed to be determined in dependence on the angle from leader's current waypoint to the next one. Moreover, the flight paths are proposed to be set to never intersect.

Finally, in the scenario of Fig. 2d, the leader UAV 1 is provided with waypoints at a sharp angle. In this case, it is proposed to have the follower UAV 3 in the outer curve go through an additional waypoint to keep the path from becoming too long, and to have the follower UAV 2 in the inner curve stop the intended waypoint path and turn earlier before the next waypoint to avoid crossing leader's flight path.

Based on the above scenarios and proposals a corresponding flight control procedure according to some embodiments is described in the following.

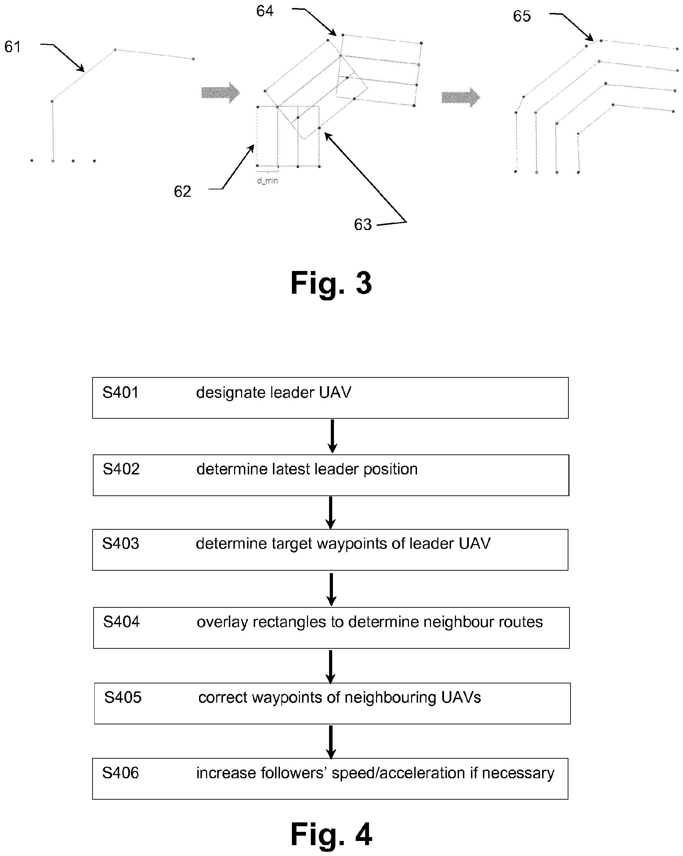

Figure 3 shows schematically a representation of an exemplary flight path determination according to some embodiments for three sidewise neighbouring follower UAVs based on waypoints of a flight path 61 of a designated leader UAV is described.

This example describes from the left to the right portion of Figure 3 how the flight path 62 of the left sidewise neighbouring follower UAV and the flight paths of the two right sidewise neighbouring follower UAVs are initiated based on the flight path 61 of the designated leader UAV. In Figure 3, segments of the flight paths are determined based on calculated and probably corrected waypoints.

First, the route or path 61 of the leader UAV is planned by determining target waypoints for the leader UAV (left portion of Figure 3). Then, rectangles are overlaid on or added to or incorporated into the planned route so that each follower UAV is maintained at a predefined minimum lateral distance dₘᵢₙ from the neighbouring UAV in the formation (central portion of Figure 3). Finally, the routes or paths of the follower UAVs are planned based on the dimensions of the rectangles and possibly corrected based on their overlap or non-overlap.

The planned new waypoints for the paths or routes of the follower UAVs are obtained by a respective rectangle with one side being the planned path 61 of the leader UAV and the other substantially parallel side of substantially same length representing the planned path 62 for the neighbouring follower UAV between a starting point of the respective follower UAV and its planned next waypoint. Based on the location of the respective rectangle, the planned path 62 of the follower UAV is changed by moving or correcting the planned new waypoint of the respective follower UAV if the direction of the path 61 towards the next planned target waypoint of the designated leader UAV is not substantially parallel to a direction of the previous route.

More specifically in embodiments, the corrections of the planned new waypoints are obtained from rectangles which are determined in lateral direction by the required distance between the flight paths and in longitudinal direction by the distance between the waypoints of the central flight path 61 of the leading UAV. Target waypoints for the left and right follower UAVs are corrected e.g. (i) if the flight path to the next calculated waypoint crosses an outer edge of the next rectangle or (ii) if the next calculated waypoint is outside the next rectangle. In the first case (i), the target waypoint of the corresponding follower UAV is shifted backwards to match with the crossing point, so that the respective path segment 63 is shortened. In the second case (ii), a gap 64 is generated and an additional target waypoint and thus an additional path segment 65 is added to match with the respective corner of the rectangle. Thereby, as depicted in the scenario of Fig. 2d, the flight path of a follower UAV in the outer curve is controlled to be routed through additional waypoints to keep the path from becoming too long, and the flight path of a follower UAV in the inner curve is controlled to be stopped and turned earlier before the next waypoint to avoid crossing the leader's flight path.

Figure 4 shows a flow diagram of a flight control procedure according to some embodiments. This control procedure can be implemented by concrete hardware circuits having one or more functions of the blocks of the flow diagram or by a software routine which controls a processor of a computer to generate the steps of the flow diagram. The hardware circuits or the processor and computer may be part of the flight control unit 100 of Fig. 1. In the latter case, the steps described below are implemented by corresponding means of an apparatus.

In step S401 (e.g. means for designating), a leader UAV is designated, e.g., based on a corresponding setting at a user interface. Then, in step S402 (e.g. means for determining), the latest position of the leader UAV is determined, e.g. based on a corresponding information (e.g. positioning signal etc.) received from the leader UAV. In the following step S403 (e.g. means for determining), target waypoint locations (target waypoints) for the leader UAV are first determined e.g. based on a planned flight path. Thereafter, in step S404 (e.g. means for determining), rectangles are overlaid to determine planned waypoints for the routes or paths of neighbouring follower UAVs, as described above in connection with Figure 3. The determined planned waypoints may for example be projected forwards to compensate for any delays caused by e.g. the communication between the UAVs and the flight control unit and/or the processing at the UAVs and/or the flight control unit and/or other delays until the target waypoints are available. Then, in step S405 (e.g. means for changing) the determined planned waypoints are for the follower UAVs are corrected based on the location and orientation of the rectangles, so that their paths are automatically adapted to the flight path of the leader UAV and utilizing dmin.

As a result, even if there were some gaps in communication, the follower UAVs would still keep flying in the right direction for a while, instead of immediately stopping to wait for further commands.

As an example, the delays can be compensated for in step S404 by offsetting the follower target waypoints forwards by a few meters.

Also, another optional feature may be implemented as an additional step S406 (e.g. means for increasing), in which a follower's speed and/or acceleration is automatically increased if the respective follower UAV fell too far behind from its next target waypoint. Thereby, the UAVs of the flight formation can be controlled to keep up with the formation and catch up when necessary.

As mentioned above, corrections for avoiding collision risks depending on specific flight paths of search patterns or a phase of search patterns controls can be added in step S405 so that a follower UAVs planned waypoint could never be set further than the next waypoint of the leader UAV. More specifically, this can be achieved by limiting the target waypoint offset to never go past corners in a flight path, offsetting target waypoints forwards towards the flight direction or adding target waypoints to counter latency effects and keep the formation in shape, limiting follower target waypoints so that they will never intersect with the leader flight path when the leader flight path is known in advance, etc.

According to another embodiment, the proposed vehicle formation control approach could be used in connection with autonomous cars when e.g. two cars in different lanes are approaching a curve. Then, the route or path could be calculated using the rectangular approach described above. The calculation or determination of rectangles could be repeated when the cars are driving in the curve to keep a desired minimum distance. In this embodiment, the length of the cars might need to be taken into consideration. I.e., the proposed rectangles could be used at the back, center and front of the cars to keep the distance and adjust the speed as well.

In another embodiments roads are usually split to lanes. Autonomous cars are driving in lanes and there the cars in different lanes may have same waypoints and sometimes roads have curves. The cars in different lanes should keep minimum distance between each other. The planned path could be built to cars which will drive side by side so that e.g. the centre of lane representing the path and then the cars width and length could be taking into account to keep the predetermined distance when planning path so that the cars would not run up especially in cases when two or more lanes are curved to the same direction.

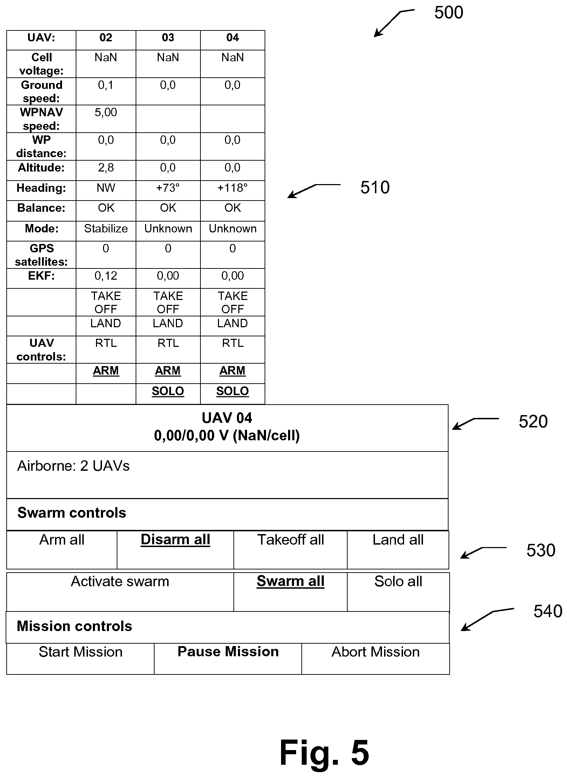

In the following, specific examples for design and functionality of user interfaces (e.g. touch-control displays) at the flight control unit or another vehicle formation control unit are described with reference to Figures 5 to 7.

Figure 5 shows schematically a representation of a control interface for adjusting aircraft parameters according to some embodiments.

Options for individually adjusting the extra speed of the above step S405 of Fig. 4 and the threshold for activation for each UAV ("drone" in Figure 5) can be seen in an upper control section 510 of the user interface. Thereby, a user is allowed to fine tune the behaviour of the UAV formation in real time. Of course, such a compensation could as well be done automatically under control of a respective software routine.

In a display window 520, specific information of a selected UAV can be displayed. Additionally, in a lower section 540, mission control buttons are provided for starting, pausing and aborting a current mission.

However, such changed settings can also introduce a collision risk when performing standard lawnmower pattern paths, since just before the leader drone was to reach a corner, the follower drones would still be instructed to fly forward with given offsets, as already explained above, e.g., in connection with Figures 2 and 3. This meant that for a while the leader UAV's and follower UAVs' paths would intersect until a new target waypoint was provided to the respective follower UAV. As explained above, this can be prevented by making sure that a follower UAV's offset target waypoint can never be set further than the next waypoint of the leader UAV. Furthermore, this control condition can be refined so that if the leader UAV had more than one waypoint remaining, the following waypoint could also be considered to determine a maximum offset for a follower UAV.

The proposed corrections for collision prevention significantly improve the formation flight by reducing the impact of latency and by preventing the UAVs from crashing into each other. However, even with these corrections, the provisioning of periodic waypoint commands from a ground station (e.g. flight control unit) can still lead to a suboptimal and unreliable control for coordinated formation flights. E.g., if a user accidentally closes the control window, the control routine would immediately stop giving new waypoint commands to the follower UAVs, leaving the leader UAV to continue the mission alone.

In view of this, a swarming functionality in a swarm control section 530 is proposed as a part of the user interface of Fig. 5, where the UAV offsets are defined. The above problem can thus be solved by moving the functionality over to an automatic swarm control as part of a main routine of the control software.

A control interface for defining offsets and arbitrary formations according to some embodiments
provides a UAV swarming control function as a basis for implementing formation-based drone flights. This swarming control function allows to designate one UAV as a leader and other connected UAVs as followers. The follower UAVs are periodically sent guided waypoints, that are calculated as offsets from the leader's location, as described above, e.g., with reference to Fig. 4.

With the control interface the user can drag UAV markers on a grid to define desired offsets and make up arbitrary formations. On the grid, the 'up' or vertical direction points towards the facing direction of the leader UAV.

As an additional option, the flight formation could be generated based on parameters, so that a user does not have to spend time manually adjusting the flight formations.

Instead of having to manually specify the UAV offsets, the user is instead allowed to input a planned flight altitude and a field of view angles of payload cameras arranged on the UAVs. These values can now be used to automatically generate a flight formation structure that would keep the UAVs optimally spaced apart to both cover maximum area and to keep safe distances to each other. The generated flight formation may start out as a line, where the distance between the UAVs is calculated e.g. from a horizontal camera angle, an altitude, and a required minimum overlap of camera footages. After this, the specified minimum safety distance between the UAVs is checked. If the UAVs are too close to each other in the line formation, then every other UAV is moved backwards so that the sideways spacing between the UAVs remains the same and guarantees full area coverage by the footages, while the added backwards spacing ensures safe distances between the UAVs. Thus, if backwards spacing needed to be added, then the straight-line formation turns into a zigzag formation.

In general, the various embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the flight control unit, or by hardware, or by a combination of software and hardware. Further in this regard it should be noted that any blocks of the logic flow, e.g., as in the Figure 4, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of exemplary and non-limiting examples a full and informative description of exemplary embodiments of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

## Claims

1. A method comprising:
designating (S401) a vehicle (12);
determining (S402) a position of the designated vehicle (12);
determining (S403) a route (61) for the designated vehicle (12) including segments with one or more waypoints;
determining (S404) a planned route for another vehicle (14, 16) by using a rectangle and a next rectangle with one side of the rectangle and one side of the next rectangle being consecutive segments of the route of the designated vehicle (12);
determining in an inner curve and in an outer curve of the other vehicle relative to the designated vehicle other substantially parallel sides of the rectangle and of the next rectangle representing segments of the planned route of the other vehicle (14, 16);
causing to change the planned route of the other vehicle in an outer curve by adding a segment (65) in a gap (64) between an end point of other substantially parallel side of the rectangle and a start point of other substantially parallel side of the next rectangle; and
causing to change (S405) waypoints of the planned route of the other vehicle (14, 16) in an inner curve to a crossing point between the other substantially parallel side of the rectangle relating to the other vehicle (14, 16) and the other substantially parallel side of the next rectangle relating to the other vehicle (14, 16) as a new waypoint.

2. The method as claimed in claim 1, further comprising increasing (S406) speed and/or acceleration of the other vehicle (14, 16) if a distance between the new waypoint of the other vehicle (14, 16) and the determined position of the designated vehicle (12) exceeds a predetermined threshold.

3. The method as claimed in claim 1 or 2, further comprising correcting the planned route of the other vehicle (14, 16), so that the caused changes in the planned route in the outer curve and the inner curve are automatically adapted to the route of the designated vehicle and utilizing a predefined minimum lateral distance.

4. The method as claimed in claim 3, further comprising controlling the determination of the waypoint of the other vehicle (14, 16) so that if the route of the designated vehicle (12) has more than one waypoint remaining, the next waypoint of the designated vehicle (12) determines the maximum amount of a predetermined spatial offset for the other vehicle (14, 16).

5. The method as claimed in any one of claims 1 to 4, further comprising controlling the determination of the new waypoint of the other vehicle (14, 16) so that the planned route of the other vehicle (14, 16) with the new waypoint does not intersect with the route of the designated vehicle (12).

6. The method as claimed in any of claims 1 to 5, further comprising controlling the planned route of the other vehicle (14, 16) between successive waypoints so that the planned route never extends past corners of the route of the designated vehicle (12).

7. The method as claimed in any of claims 1 to 6, further comprising generating a formation of the designated vehicle (12) and at least one other vehicle (14, 16) based on predetermined parameters provided to the formation.

8. The method as claimed in claim 7, further comprising setting the predetermined parameters by placing markers (601, 602) on a grid of a user interface.

9. The method as claimed in any of claims 1 to 8, further comprising periodically sending the new waypoint to the other vehicle (14, 16).

10. The method as claimed claim 4, further comprising providing values of a planned flight altitude and field of view angles to respective payload cameras of the other vehicle (14, 16) and using the provided values to automatically determine the predetermined spatial offset for the other vehicle (14, 16).

11. The method as claimed in claim 10, further comprising initially generating a vehicle formation as a line formation, checking a predetermined minimum distance between each of the vehicles (12, 14, 16) of the vehicle formation, and shifting the new waypoint of the corresponding other vehicle (14,16) backwards to match with the crossing point so that a sideway spacing between the other vehicles (14, 16) substantially remains the same.

12. The method as claimed in claim 11, further comprising controlling to have the other vehicle in the inner curve to stop in the new waypoint.

13. The method as claimed in claim 12, further comprising a turn of the other vehicle earlier in the new waypoint to avoid crossing the route of the designated vehicle (12).

14. An apparatus comprising:
means (S401) for designating a vehicle (12);
means (S402) for determining a position of the vehicle (12);
means (S403) for determining a route (61) for the designated vehicle (12) including segments with one or more waypoints;
means (S404) for determining a planned route for another vehicle (14, 16) by using a rectangle and a next rectangle with one side being of the rectangle and one side of the next rectangle being consecutive segments of the route of the designated vehicle (12),
means for determining in an inner curve and in an outer curve of the other vehicle relative to the designated vehicle other substantially parallel sides of the rectangle and of the next rectangle representing segments of the planned route of the other vehicle (14, 16);
means for causing to change the planned route of the other vehicle in an outer curve by adding a segment (65) in a gap (64) between an end point of the parallel side of the rectangle and a start point of other substantially parallel side of the next rectangle, and
means (S405) for causing to change (S405) waypoints of the planned route of the other vehicle in an inner curve to a crossing point between the other substantially parallel side of the rectangle relating to the other vehicle (14, 16) and the other substantially parallel side of the next rectangle relating to the other vehicle (14, 16) as a new waypoint.

15. A device for controlling a vehicle formation, the device (100) comprising an apparatus as claimed in claim 14.

## Patentansprüche

1. Verfahren, das Folgendes umfasst:
Benennen (S401) eines Fahrzeugs (12);
Bestimmen (S402) einer Position des benannten Fahrzeugs (12) ;
Bestimmen (S403) einer Route (61) für das benannte Fahrzeug (12), die Segmente mit einem oder mehreren Wegpunkten beinhaltet;
Bestimmen (S404) einer geplanten Route für ein anderes Fahrzeug (14, 16) unter Verwendung eines Rechtecks und eines nächsten Rechtecks, wobei eine Seite des Rechtecks und eine Seite des nächsten Rechtecks aufeinanderfolgende Segmente der Route des benannten Fahrzeugs (12) sind;
Bestimmen von weiteren im Wesentlichen parallelen Seiten des Rechtecks und des nächsten Rechtecks, die Segmente der geplanten Route des anderen Fahrzeugs (14, 16) repräsentieren, in einer Innenkurve und in einer Außenkurve des anderen Fahrzeugs relativ zum benannten Fahrzeug;
Bewirken einer Änderung der geplanten Route des anderen Fahrzeugs in einer Außenkurve durch Hinzufügen eines Segments (65) in einer Lücke (64) zwischen einem Endpunkt einer anderen im Wesentlichen parallelen Seite des Rechtecks und einem Startpunkt einer anderen im Wesentlichen parallelen Seite des nächsten Rechtecks und
Bewirken einer Änderung (S405) von Wegpunkten der geplanten Route des anderen Fahrzeugs (14, 16) in einer Innenkurve in einen Kreuzungspunkt zwischen der anderen im Wesentlichen parallelen Seite des Rechtecks, das das andere Fahrzeug (14, 16) betrifft, und der anderen im Wesentlichen parallelen Seite des nächsten Rechtecks, das das andere Fahrzeug (14, 16) betrifft, als einen neuen Wegpunkt.

2. Verfahren nach Anspruch 1, das ferner das Erhöhen (S406) der Geschwindigkeit und/oder der Beschleunigung des anderen Fahrzeugs (14, 16) umfasst, wenn ein Abstand zwischen dem neuen Wegpunkt des anderen Fahrzeugs (14, 16) und der bestimmten Position des benannten Fahrzeugs (12) einen vorbestimmten Schwellwert überschreitet.

3. Verfahren nach Anspruch 1 oder 2, das ferner das Korrigieren der geplanten Route des anderen Fahrzeugs (14, 16) derart, dass die bewirkten Änderungen der geplanten Route in der Außenkurve und der Innenkurve automatisch an die Route des benannten Fahrzeugs angepasst werden, und das Einsetzen eines vordefinierten kleinsten Seitenabstands umfasst.

4. Verfahren nach Anspruch 3, das ferner das Steuern der Bestimmung des Wegpunkts des anderen Fahrzeugs (14, 16) derart, dass, wenn die Route des benannten Fahrzeugs (12) mehr als einen verbleibenden Wegpunkt aufweist, der nächste Wegpunkt des benannten Fahrzeugs (12) den größten Betrag eines vorbestimmten räumlichen Versatzes für das andere Fahrzeug (14, 16) bestimmt, umfasst.

5. Verfahren nach einem der Ansprüche 1 bis 4, das ferner das Steuern der Bestimmung des neuen Wegpunkts des anderen Fahrzeugs (14, 16) derart, dass die geplante Route des anderen Fahrzeugs (14, 16) mit dem neuen Wegpunkt die Route des benannten Fahrzeugs (12) nicht schneidet, umfasst.

6. Verfahren nach einem der Ansprüche 1 bis 5, das ferner das Steuern der geplanten Route des anderen Fahrzeugs (14, 16) zwischen aufeinanderfolgenden Wegpunkten derart, dass sich die geplante Route nie über vorherige Ecken der Route des benannten Fahrzeugs (12) erstreckt, umfasst.

7. Verfahren nach einem der Ansprüche 1 bis 6, das ferner das Erzeugen einer Formation des benannten Fahrzeugs (12) und mindestens eines weiteren Fahrzeugs (14, 16) auf Basis von vorbestimmten Parametern, die für die Formation bereitgestellt werden, umfasst.

8. Verfahren nach Anspruch 7, das ferner das Einstellen der vorbestimmten Parameter durch Anbringen von Markern (601, 602) auf einem Raster einer Benutzerschnittstelle umfasst.

9. Verfahren nach einem der Ansprüche 1 bis 8, das ferner das periodische Senden des neuen Wegpunkts an das andere Fahrzeug (14, 16) umfasst.

10. Verfahren nach Anspruch 4, das ferner das Bereitstellen von Werten einer geplanten Flughöhe und von Sichtfeldwinkeln für jeweilige Nutzlastkameras des anderen Fahrzeugs (14, 16) und das Verwenden der bereitgestellten Werte zum automatischen Bestimmen des vorbestimmten räumlichen Versatzes des anderen Fahrzeugs (14, 16) umfasst.

11. Verfahren nach Anspruch 10, das ferner das anfängliche Erzeugen einer Fahrzeugformation als eine Linienformation, das Überprüfen eines vorbestimmten Mindestabstands zwischen jedem der Fahrzeuge (12, 14, 16) der Fahrzeugformation und das Verschieben des neuen Wegpunkts des entsprechenden anderen Fahrzeugs (14, 16) nach hinten zur Übereinstimmung mit dem Kreuzungspunkt derart, dass eine seitliche Beabstandung zwischen den anderen Fahrzeugen (14, 16) im Wesentlichen dieselbe bleibt, umfasst.

12. Verfahren nach Anspruch 11, das ferner das Steuern derart, dass das andere Fahrzeug in der Innenkurve am neuen Wegpunkt anhält, umfasst.

13. Verfahren nach Anspruch 12, das ferner ein früheres Abbiegen des anderen Fahrzeugs am neuen Wegpunkt, um ein Kreuzen der Route des benannten Fahrzeugs (12) zu vermeiden, umfasst.

14. Einrichtung, die Folgendes umfasst:
Mittel (S401) zum Benennen eines Fahrzeugs (12);
Mittel (S402) zum Bestimmen einer Position des Fahrzeugs (12) ;
Mittel (S403) zum Bestimmen einer Route (61) für das benannte Fahrzeug (12), die Segmente mit einem oder mehreren Wegpunkten beinhaltet;
Mittel (S404) zum Bestimmen einer geplanten Route für ein anderes Fahrzeug (14, 16) unter Verwendung eines Rechtecks und eines nächsten Rechtecks, wobei eine Seite des Rechtecks und eine Seite des nächsten Rechtecks aufeinanderfolgende Segmente der Route des benannten Fahrzeugs (12) sind,
Mittel zum Bestimmen von weiteren im Wesentlichen parallelen Seiten des Rechtecks und des nächsten Rechtecks, die Segmente der geplanten Route des anderen Fahrzeugs (14, 16) repräsentieren, in einer Innenkurve und in einer Außenkurve des anderen Fahrzeugs relativ zum benannten Fahrzeug;
Mittel zum Bewirken einer Änderung der geplanten Route des anderen Fahrzeugs in einer Außenkurve durch Hinzufügen eines Segments (65) in einer Lücke (64) zwischen einem Endpunkt der parallelen Seite des Rechtecks und einem Startpunkt einer anderen im Wesentlichen parallelen Seite des nächsten Rechtecks und
Mittel (S405) zum Bewirken einer Änderung (S405) von Wegpunkten der geplanten Route des anderen Fahrzeugs in einer Innenkurve in einen Kreuzungspunkt zwischen der anderen im Wesentlichen parallelen Seite des Rechtecks, das das andere Fahrzeug (14, 16) betrifft, und der anderen im Wesentlichen parallelen Seite des nächsten Rechtecks, das das andere Fahrzeug (14, 16) betrifft, als einen neuen Wegpunkt.

15. Vorrichtung zum Steuern einer Fahrzeugformation, wobei die Vorrichtung (100) eine Einrichtung nach Anspruch 14 umfasst.

## Revendications

1. Procédé comprenant les étapes suivantes :
désigner (S401) un véhicule (12) ;
déterminer (S402) une position du véhicule (12) désigné ;
déterminer (S403) un itinéraire (61) pour le véhicule (12) désigné comprenant des segments avec un ou plusieurs points de cheminement ;
déterminer (S404) un itinéraire planifié pour un autre véhicule (14, 16) en utilisant un rectangle et un rectangle suivant avec un côté du rectangle et un côté du rectangle suivant qui sont les segments consécutifs de l'itinéraire du véhicule (12) désigné ;
déterminer dans une courbe interne et dans une courbe externe de l'autre véhicule par rapport au véhicule désigné, d'autres côtés sensiblement parallèles du rectangle, et du rectangle suivant représentant les segments de l'itinéraire planifié de l'autre véhicule (14, 16) ;
provoquer le changement de l'itinéraire planifié de l'autre véhicule dans une courbe externe en ajoutant un segment (65) dans un espace (64) entre un point de fin de l'autre côté sensiblement parallèle du rectangle et un point de départ de l'autre côté sensiblement parallèle du rectangle suivant ; et
provoquer le changement (S405) des points de cheminement de l'itinéraire planifié de l'autre véhicule (14, 16) dans une courbe interne par rapport à un point de croisement entre l'autre côté sensiblement parallèle du rectangle relatif à l'autre véhicule (14, 16) et l'autre côté sensiblement parallèle de l'autre rectangle relatif à l'autre véhicule (14, 16) en tant que nouveau point de cheminement.

2. Procédé selon la revendication 1, comprenant en outre l'étape pour augmenter (S406) la vitesse et/ou l'accélération de l'autre véhicule (14, 16) si une distance entre le nouveau point de cheminement de l'autre véhicule (14, 16) et la position déterminée du véhicule (12) désigné dépasse un seuil prédéterminé.

3. Procédé selon la revendication 1 ou 2, comprenant en outre l'étape pour corriger l'itinéraire planifié de l'autre véhicule (14, 16) de sorte que les changements provoqués dans l'itinéraire planifié dans la courbe externe et la courbe interne sont automatiquement adaptés à l'itinéraire du véhicule désigné et l'étape pour utiliser une distance latérale minimum prédéfinie.

4. Procédé selon la revendication 3, comprenant en outre l'étape pour commander la détermination du point de cheminement de l'autre véhicule (14, 16) de sorte que si l'itinéraire du véhicule (12) désigné a plus d'un point de cheminement résiduel, le point de cheminement suivant du véhicule (12) désigné détermine la quantité maximum d'un décalage spatial prédéterminé pour l'autre véhicule (14, 16).

5. Procédé selon l'une quelconque des revendications 1 à 4, comprenant en outre l'étape pour commander la détermination du nouveau point de cheminement de l'autre véhicule (14, 16) de sorte que l'itinéraire planifié de l'autre véhicule (14, 16) avec le nouveau point de cheminement ne coupe pas l'itinéraire du véhicule (12) désigné.

6. Procédé selon l'une quelconque des revendications 1 à 5, comprenant en outre l'étape pour commander l'itinéraire planifié de l'autre véhicule (14, 16) entre les points de cheminement successifs de sorte que l'itinéraire planifié ne s'étend jamais au-delà des coins de l'itinéraire du véhicule (12) désigné.

7. Procédé selon l'une quelconque des revendications 1 à 6, comprenant en outre l'étape pour générer une formation du véhicule (12) désigné et au moins d'un autre véhicule (14, 16) sur la base des paramètres prédéterminés fournis à la formation.

8. Procédé selon la revendication 7, comprenant en outre l'étape pour régler les paramètres prédéterminés en plaçant des marqueurs (601, 602) sur une grille d'une interface utilisateur.

9. Procédé selon l'une quelconque des revendications 1 à 8, comprenant en outre l'étape pour envoyer périodiquement le nouveau point de cheminement à l'autre véhicule (14, 16).

10. Procédé selon la revendication 4, comprenant en outre l'étape pour fournir des valeurs d'une altitude de vol planifié et d'un champ d'angles de vision aux caméras de charge utile respectives de l'autre véhicule (14, 16) et l'étape pour utiliser les valeurs fournies afin de déterminer automatiquement le décalage spatial prédéterminé pour l'autre véhicule (14, 16).

11. Procédé selon la revendication 10, comprenant en outre l'étape pour générer initialement une formation de véhicules en tant que formation en ligne, l'étape pour vérifier une distance minimum prédéterminée entre chacun des véhicules (12, 14, 16) de la formation de véhicules, et l'étape pour déplacer le nouveau point de cheminement de l'autre véhicule (14, 16) correspondant vers l'arrière afin de correspondre au point de croisement de sorte qu'un espacement latéral entre les autres véhicules (14, 16) reste sensiblement le même.

12. Procédé selon la revendication 11, comprenant en outre l'étape de commande pour que l'autre véhicule dans la courbe interne s'arrête dans le nouveau point de cheminement.

13. Procédé selon la revendication 12, comprenant en outre un virage de l'autre véhicule plus tôt dans le nouveau point de cheminement pour éviter de couper l'itinéraire du véhicule (12) désigné.

14. Appareil comprenant :
un moyen (S401) pour désigner un véhicule (12) ;
un moyen (S402) pour déterminer une position du véhicule (12) ;
un moyen (S403) pour déterminer un itinéraire (61) pour le véhicule (12) désigné comprenant des segments avec un ou plusieurs points de cheminement ;
un moyen (S404) pour déterminer un itinéraire planifié pour un autre véhicule (14, 16) en utilisant un rectangle et un rectangle suivant avec un côté du rectangle et un côté du rectangle suivant qui sont les segments consécutifs de l'itinéraire du véhicule (12) désigné,
un moyen pour déterminer, dans une courbe interne et dans une courbe externe de l'autre véhicule par rapport au véhicule désigné, d'autres côtés sensiblement parallèles du rectangle et du rectangle suivant représentant les segments de l'itinéraire planifié de l'autre véhicule (14, 16) ;
un moyen pour provoquer le changement de l'itinéraire planifié de l'autre véhicule dans une courbe externe en ajoutant un segment (65) dans un espace (64) entre un point de fin du côté parallèle du rectangle et un point de départ de l'autre côté sensiblement parallèle du rectangle suivant, et
un moyen (S405) pour provoquer le changement (S405) des points de cheminement de l'itinéraire planifié de l'autre véhicule dans une courbe par rapport à un point de croisement entre l'autre côté sensiblement parallèle du rectangle par rapport à l'autre véhicule (14, 16) et l'autre côté sensiblement parallèle du rectangle suivant par rapport à l'autre véhicule (14, 16) en tant que nouveau point de cheminement.

15. Dispositif pour commander une formation de véhicule, le dispositif (100) comprenant un appareil selon la revendication 14.
